# FASCICULE DE BREVET EUROPEEN

(11) **EP 3 685 244 B1**
(45) Date de publication et mention de la délivrance du brevet: **27.10.2021**
(21) Numéro de dépôt: 18769408.8
(22) Date de dépôt: 21.09.2018
(51) Int. Cl.: G06F 1/12, G06F 1/14, G06F 11/16, H04J 3/06, H04J 3/14, H04L 12/40

(54) **PROCEDE DE SYNCHRONISATION D'UN ENSEMBLE DE DISPOSITIFS ET SYSTEME DE SYNCHRONISATION ASSOCIES**
VERFAHREN ZUM SYNCHRONISIEREN EINES SATZES VON GERÄTEN UND ZUGEHÖRIGES SYNCHRONISATIONSSYSTEM
METHOD FOR SYNCHRONIZING A SET OF DEVICES AND CORRESPONDING SYNCHRONIZATION SYSTEM

(30) Priorité: 22.09.2017 FR 1700972
(43) Date de publication de la demande: 29.07.2020
(73) Titulaire: Thales, 92400 Courbevoie (FR); CentraleSupélec, 91190 - Gif sur Yvette (FR)
(72) Inventeur: RAYROLE, Martin, 78140 Velizy-Villacoublay (FR); TEMPLIER, Michaël, 31036 Toulouse Cedex 1 (FR); FITTERER, Eric, 33700 Merignac (FR); MARCADET, Dominique, 91190 Gif Sur Yvette (FR); BOULANGER, Frédéric, 91190 Gif Sur Yvette (FR); TAHA, Safouan, 91190 Gif Sur Yvette (FR)
(74) Mandataire: Lavoix
(86) Numéro de dépôt international: PCT/EP2018/075704
(87) Numéro de publication internationale: WO 2019/057941

(56) Documents cités:
- US-A- 5 604 754
- US-A1- 2006 047 989
- US-A1- 2010 088 535

## Description

La présente invention concerne le domaine des systèmes informatiques critiques, tel que par exemple les systèmes avioniques embarqués dans les aéronefs.

Par « système informatique critique » on entend un système informatique dont une panne est propre à entraîner des conséquences dramatiques, par exemple des morts ou blessés graves, des dégâts matériels importants, ou encore des conséquences graves pour l'environnement. De tels systèmes informatiques critiques sont basés sur un partitionnement strict des ressources de calcul et des ressources réseau.

Par la suite, de tels systèmes informatiques critiques correspondent à des systèmes avioniques.

Un système avionique met en œuvre des fonctions avioniques. Une fonction avionique est par exemple le calcul de paramètres de vol en fonction de signaux de mesure fournis par des capteurs, l'élaboration de signaux de commande d'actionneurs de l'aéronef en fonction de paramètres de vol et/ou de commandes de vol, l'affichage de paramètres de vol sur un afficheur, l'enregistrement de paramètres de vol pour la maintenance...

Au sein d'un système avionique plusieurs dispositifs (i.e. équipements) avioniques sont interconnectés via un réseau de communication, par exemple un réseau ARINC 664-P7 d'aéronef.

Actuellement, au sein d'un tel réseau ARINC 664-P7 d'aéronef, il n'existe pas de mécanisme de synchronisation robuste et précis. En effet, la seule heure partagée actuellement dans un aéronef est basée sur un mécanisme dont la précision est de l'ordre de la seconde alors que certaines fonctions avioniques, telles que l'accroissement de l'intégrité des réseaux, la réduction de la latence de traitement des messages dans les architectures distribuées (notamment les architectures avioniques modulaires intégrées de deuxième génération (ou « IMA-2G » pour « *Intregrated Modulars Avionics* ― *2^{nd} Génération* » en anglais)), la synchronisation de flux audio/vidéo, la détection de certaines attaques de sûreté, l'identification de la cause racine d'un dysfonctionnement du système avionique, la fusion de données de capteurs, etc. requièrent une référence horaire partagée robuste (i.e. utilisable par une fonction de niveau « catastrophique », tel que défini par le document AMJ 25.1309 de la «Joint Aviation Authorities ») et dont la précision élevée est garantie et de l'ordre de 100µs au maximum. Selon l'état de l'art actuel, la garantie d'une telle précision n'est atteignable qu'en ajoutant un réseau de synchronisation parallèle au réseau ARINC 664-P7, ce qui augmente le coût, le poids et la consommation du système avionique.

US 2006/047989 A1 divulgue un système multiprocesseur pour synchroniser les horloges interne des processeurs esclaves avec l'horloge interne maître.

Un des buts de la présente invention est de proposer un procédé de synchronisation au sein d'un système informatique critique, tel qu'un système avionique, permettant d'améliorer la robustesse et de garantir une précision élevée de la référence horaire partagée au sein d'un réseau de ce système informatique, et ce tout en évitant un mécanisme de synchronisation basé sur une mesure temporelle interne à ce même réseau, un tel mécanisme étant impropre à vérifier l'intégrité de ce réseau.

A cet effet l'invention propose un procédé de synchronisation d'un ensemble de dispositifs informatiques critiques comme dans la revendication 1.

Suivant d'autres aspects avantageux de l'invention, le procédé de synchronisation est tel que :
- la période de réitération du procédé est conforme à la relation suivante : $P < min \left[\begin{matrix}{min}_{serveur s} \left[\frac{{P}_{R} - {max}_{serveur {s}^{′}} \left(G\left({s}^{′}, s\right)\right) - {max}_{serveur {s}^{′}} \left[WCTT\left({s}^{′}, s\right).\left(D\left(s\right)+D\left({s}^{′}\right)\right)\right]}{M . \left(D\left(s\right)+{max}_{serveur {s}^{′}}D\left({s}^{′}\right)\right)}\right] , \\ {min}_{client c , serveur s} \left[\frac{{P}_{R} - G \left(s, c\right)}{D \left(c\right) + D \left(s\right)}-WCTT\left(s, c\right)\right]\end{matrix}\right]$ avec :
   - G(s',s) la différence temporelle entre les meilleur (BCTT) et pire (WCTT) temps théoriques de transmission d'un paquet transmis dans la liaison virtuelle entre deux serveurs,
   - P_{R} une donnée de précision correspondant à l'écart maximal acceptable entre la référence horaire de deux dispositifs informatiques,
   - D un taux de dérive maximal de l'horloge interne d'un dispositif informatique critique ;
   - M le nombre de dispositifs informatiques critiques dudit ensemble ;
- chaque dispositif informatique critique comprend également un module de gestion des panne(s) de synchronisation propre à être détectée(s) lors de la mise en œuvre dudit procédé, et dans lequel le procédé comprend, au cours d'une période courante, préalablement à la réception d'au moins un message de synchronisation et à l'estimation de l'heure courante du serveur émetteur :
   - la transmission, par le module de gestion de l'heure du dispositif informatique critique courant, à son propre module de gestion des pannes, de toute information, associée à un module de gestion des pannes d'au moins un serveur émetteur distinct du dispositif informatique critique courant, et reçue au cours de la période précédente,
   - l'exécution de chaque action, non encore exécutée, reçue de son propre module de gestion des pannes,
   - le dispositif informatique critique courant étant un serveur courant parmi la pluralité de serveurs, chaque serveur étant connecté à chaque autre serveur et à chaque client par une liaison virtuelle de synchronisation ;
- au cours d'une phase d'initialisation, le procédé comprend, préalablement à la réception d'au moins un message de synchronisation et à l'estimation de l'heure courante du serveur émetteur:
   - la détermination d'une référence horaire du serveur courant par application d'une fonction affine prédéterminée à la valeur de l'horloge interne du serveur courant à l'instant courant, la fonction affine étant associée à un facteur et à un décalage dont les valeurs sont préalablement initialisées à des valeurs initiales prédéterminées,
   - l'émission d'un message de synchronisation comprenant un champ d'identification représentatif de la phase d'initialisation du module de gestion de l'heure du serveur courant et comprenant la référence horaire du serveur courant ;
- successivement à l'estimation de l'heure courante du serveur émetteur mise en œuvre, pour chaque message de synchronisation reçu comprenant un champ d'identification représentatif de la phase d'initialisation d'un serveur émetteur distinct, et mise en œuvre dès qu'un premier nombre prédéterminé de messages de synchronisation reçus, est atteint, le procédé comprend :
   - la détermination d'une nouvelle référence horaire correspondant à l'heure courante maximale obtenue à partir des heures courantes associées à chaque message,
   - la mise à jour du facteur et du décalage de la fonction affine en fonction de ladite nouvelle référence horaire,
   - le démarrage de la phase opérationnelle du module de gestion de l'heure du serveur courant.
- successivement à l'estimation de l'heure courante du serveur émetteur mise en œuvre, pour chaque message de synchronisation reçu comprenant un champ d'identification représentatif de la phase opérationnelle d'un serveur émetteur distinct, et mise en œuvre dès qu'un deuxième nombre prédéterminé de messages de synchronisation reçus, est atteint, le procédé comprend :
   - la détermination d'une nouvelle référence horaire correspondant à l'heure courante moyenne obtenue à partir des heures courantes associées à chaque message,
   - la mise à jour du facteur et du décalage de la fonction affine en fonction de ladite nouvelle référence horaire,
   - le démarrage de la phase opérationnelle du module de gestion de l'heure du serveur courant.
- le dispositif informatique critique courant étant un serveur courant parmi la pluralité de serveurs, chaque serveur étant connecté à chaque autre serveur et à chaque client par une liaison virtuelle de synchronisation, au cours de la phase opérationnelle, le procédé comprend :
   - pour chaque message de synchronisation reçu comprenant un champ d'identification représentatif de la phase opérationnelle d'un serveur émetteur distinct :
   - si l'instant de réception du message est antérieur de plus de deux périodes à l'instant courant, l'émission d'une information représentative d'une anomalie au module de gestion de panne du client courant et l'arrêt du traitement du message,
   - sinon ladite estimation de l'heure courante associée audit message
   - la détermination d'une nouvelle référence horaire correspondant à l'heure courante moyenne obtenue à partir de l'heure courante du serveur courant et des heures courantes associées à chaque message,
   - la mise à jour du facteur et du décalage de la fonction affine en fonction de ladite nouvelle référence horaire, et
   - l'émission d'un message de synchronisation comprenant un champ d'identification représentatif de la phase opérationnelle du serveur courant et contenant ladite référence horaire du serveur courant ;
- le dispositif informatique critique courant étant un client courant parmi la pluralité de clients, chaque client étant connecté à chaque serveur de la pluralité de serveurs par une liaison virtuelle de synchronisation, au cours d'une phase d'initialisation, successivement à l'estimation de l'heure courante du serveur émetteur mise en œuvre à partir du premier message de synchronisation reçu comprenant un champ d'identification représentatif de la phase opérationnelle d'un serveur émetteur distinct, le procédé comprend :
   - la mise à jour de la référence horaire du client courant égale à l'heure courante associée audit message,
   - l'initialisation des valeurs initiales de facteur et de décalage d'une fonction affine applicable à la valeur de l'horloge interne du client courant,
   - le démarrage de la phase opérationnelle du module de gestion de l'heure du client courant.
- le dispositif informatique critique courant étant un client courant parmi la pluralité de clients, chaque client étant connecté à chaque serveur de la pluralité de serveurs par une liaison virtuelle de synchronisation, au cours d'une phase opérationnelle, le procédé comprend :
   - pour chaque message de synchronisation reçu comprenant un champ d'identification représentatif de la phase opérationnelle d'un serveur émetteur distinct :
      - si l'instant de réception du message est antérieur de plus de deux périodes à l'instant courant, l'émission d'une information représentative d'une anomalie au module de gestion de panne du client courant et l'arrêt du traitement du message,
      - sinon ladite estimation de l'heure courante associée audit message,
   - si la valeur absolue de la différence entre, d'une part une référence horaire du client courant obtenue par application d'une fonction affine à la valeur de l'horloge interne du client courant à l'instant courant, et d'autre part l'heure courante moyenne obtenue à partir des heures courantes associées à chaque message est supérieure à un seuil prédéterminé de précision, l'émission d'une information représentative d'une anomalie au module de gestion de panne du client courant,
   - détermination d'une nouvelle référence horaire correspondant à l'heure courante moyenne obtenue à partir des heures courantes associées à chaque message, et
   - mise à jour du facteur et du décalage de la fonction affine du client courant en fonction de ladite nouvelle référence horaire.

L'invention a également pour objet un système de synchronisation d'un ensemble de dispositifs informatiques critiques comme dans la revendication 10.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système de synchronisation selon l'invention;
- la figure 2 est un organigramme d'un procédé de synchronisation selon un premier mode de réalisation de l'invention où le dispositif informatique mettant en œuvre le procédé est un serveur ;
- la figure 3 est un organigramme d'un procédé de synchronisation selon un deuxième mode de réalisation de l'invention où le dispositif informatique mettant en œuvre le procédé est un client.

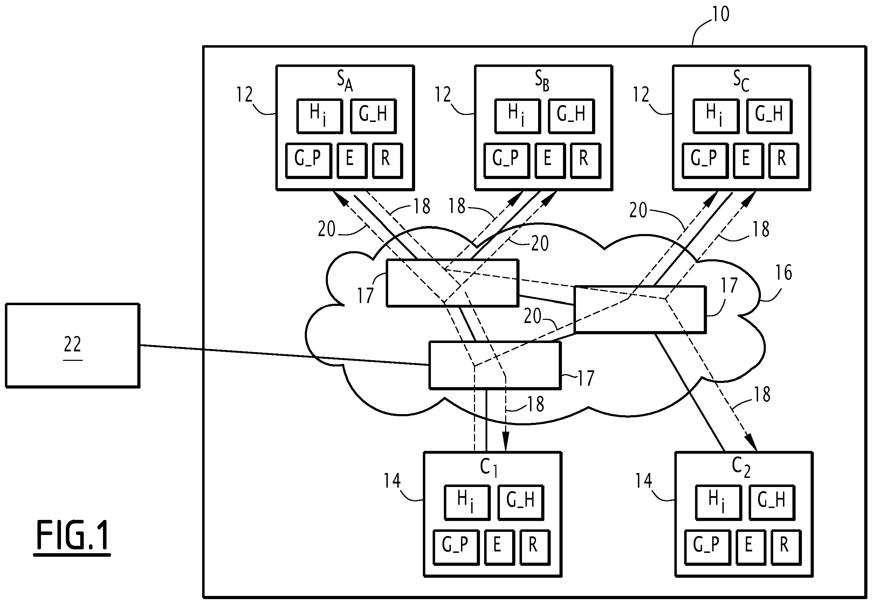

Le système de synchronisation 10 illustré sur la figure 1 est par exemple embarqué à bord d'un aéronef non représenté. Le système de synchronisation 10 est configuré pour échanger une référence horaire entre d'une part une pluralité de M (M≥2) dispositifs informatiques critiques correspondant ici à des dispositifs avioniques, appelé serveurs 12, tel que les trois serveurs S_{A}, S_{B} et S_{C} et d'autre part une pluralité de Q (Q≥2) dispositifs informatiques critiques, correspondant ici à des dispositifs avioniques, appelés clients 14 C₁ et C₂.

En particulier, un dispositif avionique serveur 12 ou client 14 est un calculateur avionique propre à exécuter des logiciels, en garantissant un partitionnement spatial et temporel strict de ces logiciels. Ce partitionnement est, par exemple, mis en œuvre par un système d'exploitation conforme à la norme ARINC 653.

Selon un aspect particulier, un même dispositif avionique est propre à fonctionner à la fois comme serveur 12 (i.e. à mettre en œuvre les étapes spécifiques du procédé de synchronisation associé au type « serveur » de dispositif avionique) et comme client 14 (i.e. à mettre en œuvre les étapes spécifiques du procédé de synchronisation associé au type «client » de dispositif avionique).

Serveurs 12 et clients 14 sont connectés à un réseau de communication 16, par exemple un réseau de communication avionique conforme à la norme ARINC A664-p7, et de préférence redondé.

Plus précisément, le réseau 16 comprend une pluralité de commutateurs réseau 17.

De plus, selon une architecture prédéfinie et statique du réseau, les flux de données échangés entre les différents dispositifs avioniques serveurs ou clients sont séparés selon une ségrégation stricte.

En particulier, pour chaque serveur 12, par exemple le serveur S_{A}, une liaison virtuelle 18 dédiée (ou VL pour « *Virtual Link* » en anglais), dite de synchronisation, connecte ce serveur 12, via les commutateurs réseau 17, à tous les autres serveurs 12 S_{B} et S_{C} et tous les clients C₁ et C₂ De telles liaisons virtuelles 18 de synchronisation sont propres à transporter des messages de synchronisation d'horloge.

De manière similaire, pour chaque client 14, par exemple le client C₁, une liaison virtuelle 20 dédiée, dite de commande, (ou VL pour « *Virtual Link* » en anglais) connecte ce client 14 vers tous les serveurs 12 S_{A}, S_{B} et S_{C}.

En particulier, via une telle liaison virtuelle de commande chaque client 14 est propre à demander le redémarrage du procédé de synchronisation selon l'invention, ou la remise à zéro de la référence horaire partagée. A chacune de ces commandes est associé l'instant, selon la référence horaire, où la commande doit être exécutée par les serveurs 12.

Selon un aspect particulier, une commande n'est prise en compte par les serveurs que si elle est confirmée par la réception d'une commande du même type envoyée par au moins un autre client dans un laps de temps prédéfini.

Selon un aspect particulier, les liaisons virtuelles 18 de synchronisation sont configurées avec un plus haut niveau de priorité que toutes les autres liaisons virtuelles mises en œuvre par le réseau 16, notamment les liaisons virtuelles 20 de commande.

De plus, chaque dispositif avionique serveur 12 ou client 14 contient au moins les éléments suivants : une horloge interne Hᵢ, un module de gestion de l'heure G_H propre à mettre en œuvre le procédé selon l'invention et correspondant au point d'origine et/ou respectivement destinataire des liaisons virtuelles de synchronisation 18 et de commande 20, un module de gestion des pannes G_P dédié à la gestion des pannes détectées lors de la mise en œuvre du procédé selon l'invention, un module d'émission réseau E dont le délai de transmission d'un message depuis la partition (au sens de la norme ARINC 653) jusqu'à son émission sur le réseau 16 est connu et fixe (pas de gigue (i.e. variation de latence)), un module de réception R réseau, dans lequel chaque paquet reçu est propre à être horodaté avec l'horloge interne Hᵢ du dispositif avionique, dès sa réception par le port d'entrée connecté au réseau 16 A664-p7.

Les modules de gestion de l'heure G_H et de gestion des pannes G_P sont par exemple implémentés, dans chacun des serveurs 12 ou client 14, par un logiciel hébergé dans une ou plusieurs partition(s).

En variante, tout ou partie des modules de gestion de l'heure G_H et de gestion des pannes G_P est propre à être mise en œuvre au moyen d'un ou de plusieurs circuit(s) logique programmable, tel qu'un FPGA (de l'anglais *Field Programmable Gate Array),* ou encore sous forme d'un circuit intégré dédié, tel qu'un ASIC (de l'anglais *Application Specific Integrated Circuit)* montés sur une carte électronique embarquée sur le dispositif avionique considéré.

Selon la présente invention, un message émis sur une liaison virtuelle 18 de synchronisation comprend notamment quatre champs distincts, à savoir :
- un champ dédié à un numéro de version du protocole correspondant par exemple à un entier sur quatre bits,
- un champ d'identification du type de message selon que le procédé de synchronisation mis en œuvre dans le dispositif avionique considéré est en phase d'initialisation INIT ou en phase opérationnelle TIME, codé par exemple par un entier sur quatre bits,
- un champ notification émis par le module de gestion de pannes du serveur émetteur, par exemple S_{B}, à destination du module de gestion de pannes de chacun des autres serveurs par exemple les serveurs S_{A} et S_{C}, une tel champ pouvant prendre une valeur nulle représentative de l'absence de notification, ou toute autre valeur dépendant du fonctionnement interne des modules de gestion de pannes représentative de la première notification émise par le module de gestion de pannes et non encore transmise sur la dite liaison virtuelle 18 de synchronisation, codée par exemple par un entier sur un octet, et
- un champ dédié à l'insertion de la référence horaire Href calculée par le serveur qui émet le message, par exemple la référence horaire Href_{B} calculée par le serveur S_{B}, codée par exemple par un entier sur huit octets indiquant le nombre de microsecondes écoulées depuis la remise à zéro de ce compteur.

Lors de la conception du réseau de communication 16, une plateforme de configuration 22 est propre à déterminer, pour chaque point de terminaison (i.e. un serveur 12 ou un client 14) d'une liaison virtuelle 18 de synchronisation, les meilleur BCTT et pire WCTT temps théoriques de transmission d'un paquet reçu dans la liaison virtuelle considérée entre deux dispositifs avioniques que ce soit un couple de deux serveurs ou un couple comprenant un serveur et un client.

Ces paramètres BCTT et WCTT associés à une liaison virtuelle 18 donnée ainsi que d'autres données de configuration prédéterminées sont intégrées dans les fichiers de configuration de chaque dispositif avionique du système de synchronisation 10 embarqué et/ou dans un fichier stocké au sein de la plateforme de configuration 22. Parmi les autres données de configuration figurent notamment : le nombre N de serveurs 12 nécessaires pour garantir la robustesse de la référence horaire déterminée et partagée au sein du réseau 16 ARINC A664-p7, un taux D de dérive maximal de l'horloge interne Hᵢ d'un dispositif avionique 12 ou 14 considéré par rapport à une heure théorique exacte (ce taux est une donnée caractéristique des composants électroniques implantés dans le dispositif avionique), une donnée de précision P_{R} correspondant à l'écart maximal acceptable entre la référence horaire de deux clients par exemple, ou encore la valeur prédéterminée de la période P de synchronisation, le procédé selon l'invention étant mis en œuvre périodiquement conformément à cette période P par chaque module de gestion de l'heure G_H qu'il soit compris dans un dispositif avionique correspondant à un serveur 12 ou à un client 14, etc.

En particulier, pour garantir la fiabilité de la valeur de la donnée de précision P_{R}, la plateforme de configuration 22, est propre à vérifier que la période P est conforme à la relation suivante : $P < min \left[\begin{matrix}{min}_{serveur s} \left[\frac{{P}_{R} - {max}_{serveur {s}^{′}} \left(G\left({s}^{′}, s\right)\right) - {max}_{serveur {s}^{′}} \left[WCTT\left({s}^{′}, s\right).\left(D\left(s\right)+D\left({s}^{′}\right)\right)\right]}{M . \left(D\left(s\right)+{max}_{serveur {s}^{′}}D\left({s}^{′}\right)\right)}\right] , \\ {min}_{client c , serveur s} \left[\frac{{P}_{R} - G \left(s, c\right)}{D \left(c\right) + D \left(s\right)}-WCTT\left(s, c\right)\right]\end{matrix}\right]$ avec G(s',s) la différence temporelle entre les meilleur BCTT et pire WCTT temps théoriques de transmission d'un paquet transmis dans la liaison virtuelle par un serveur s' vers un serveur s.

Par ailleurs, chaque module de gestion de l'heure G_H est propre à détecter une anomalie de synchronisation, par exemple une différence entre sa propre référence horaire et celle d'un autre serveur qui soit trop importante pour garantir la précision P_{R}, et à la signaler au module de gestion des pannes G_P du dispositif avionique auquel les modules de gestion de l'heure G_H et de gestion des pannes G_P appartiennent tous deux.

En réponse, le module de gestion des pannes G_P est propre à indiquer au module de gestion de l'heure G_H une suite d'actions à exécuter en réaction à cette anomalie de synchronisation. La correspondance entre le type d'anomalie de synchronisation détectée et la suite d'actions à exécuter est également une donnée de configuration propre à être stockée dans un fichier de configuration de chaque dispositif avionique considéré et dépend de l'architecture de sécurité du système informatique critique global et de la ou des utilisations de la référence horaire.

Une telle action est par exemple le redémarrage du module de gestion de l'heure G_H, ou la diffusion, par le module de gestion de l'heure G_H d'une information représentative de cette anomalie, également appelée notification, aux autres serveurs 12, ou l'exclusion d'un serveur 12 à prendre en compte pour mettre en œuvre le procédé de synchronisation selon l'invention, ou l'arrêt de la mise en œuvre du procédé de synchronisation selon l'invention, etc...

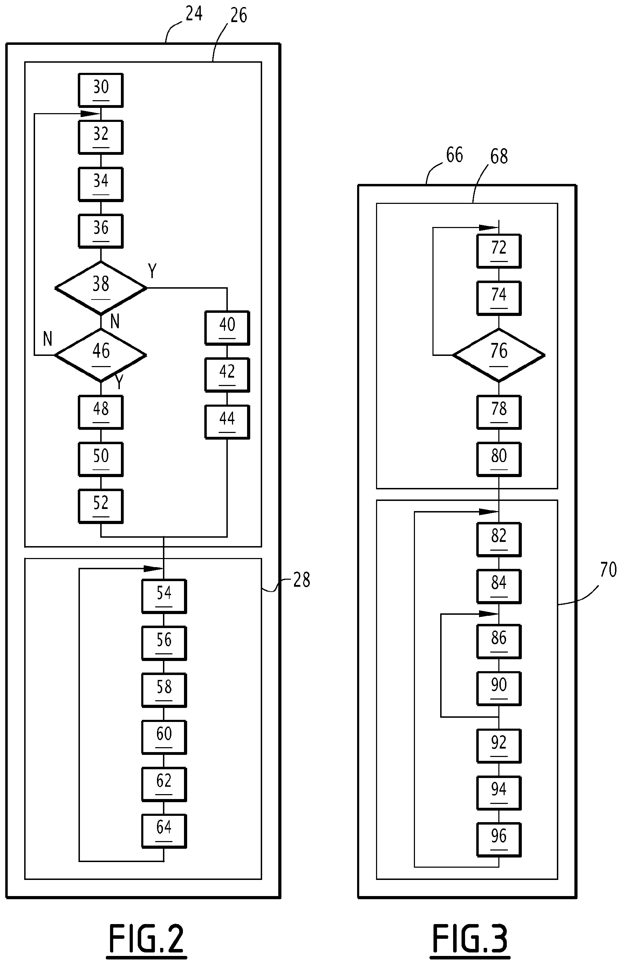

Le procédé de synchronisation mis en œuvre par chaque dispositif avionique, serveur 12 ou client 14 du système de synchronisation 10 de la figure 1 va maintenant être présenté plus en détail en référence à la figure 2, lorsque le dispositif avionique est un serveur 12 et en référence à la figure 3, lorsque le dispositif avionique est un client 14.

Comme décrit par la suite en relation avec la figure 2 ou la figure 3, que le dispositif avionique soit un serveur 12 ou un client 14, ces deux types de dispositifs avioniques du système de synchronisation 10 mettent en œuvre tous deux périodiquement, deux étapes essentielles, à savoir une étape de réception d'au moins un message de synchronisation transmis par un serveur 12 émetteur distinct (par exemple S_{B}) du dispositif informatique critique courant (serveur 12, par exemple, S_{A} ou client 14, par exemple C₁), chaque message étant associé à un instant de réception t*i* avec *i* l'index du serveur émetteur et comprenant au moins une référence horaire Href_{B} déterminée par le serveur émetteur (par exemple S_{B}), et pour chaque message de synchronisation reçu, une étape d'estimation de l'heure courante Hcᵢ du serveur émetteur (par exemple S_{B}) à partir d'un quintuplet de paramètres comprenant :
▪ la référence horaire Hrefᵢ avec i l'index du serveur émetteur, par exemple Href_{B} pour le serveur émetteur S_{B}.
▪ une valeur h_{int_tc_di} de l'horloge interne du dispositif informatique *di* critique courant à l'instant courant t*c*, l'instant courant t*c* étant propre à augmenter au fur et à mesure du temps qui s'écoule et correspondant à l'instant courant de mise en œuvre d'une étape du procédé selon l'invention,
▪ une valeur h_{int_ti_di} de l'horloge interne du dispositif informatique *di* critique courant à l'instant de réception ti,
▪ la valeur minimale BCTT(Sᵢ, dᵢ) et la valeur maximale WCTT(Sᵢ, dᵢ) de temps de transmission associée à la liaison virtuelle VL entre le serveur émetteur Sᵢ, par exemple le serveur émetteur S_{B}, et le dispositif informatique critique *dᵢ* courant.

De plus, que le dispositif avionique soit un serveur 12 ou un client 14, ces deux types de dispositifs avioniques du système de synchronisation 10 mettent en œuvre au cours d'une période courante, préalablement à la réception d'au moins un message de synchronisation et à l'estimation de l'heure courante Hc_{B} du serveur émetteur S_{B} :
- la transmission, par le module de gestion de l'heure du dispositif informatique critique courant, à son propre module de gestion des pannes G_P, de toute information, associée à un module de gestion des pannes G_P d'au moins un serveur émetteur distinct du dispositif informatique critique courant, et reçue au cours de la période précédente,
- l'exécution de chaque action, non encore exécutée, reçue de son propre module de gestion des pannes G_P.

En d'autres termes, la présente invention tire profit des caractéristiques spécifiques des systèmes partitionnés critiques, à savoir la configuration prédéfinie et statique du réseau de communication 16, la ségrégation stricte des flux de données échangés au sein de ce réseau de communication 16, et la maitrise des temps de traversée du réseau en utilisant le calcul théorique mis en œuvre lors de la conception du réseau 16 pour déterminer le temps de traversée d'un paquet de donnée d'une liaison virtuelle 18, ce qui permet d'éviter l'utilisation de méthodes statistiques, telles que, par exemple, celles associées au protocole PTP (IEEE 1588) (pour « *Precision Time Protocol* » en anglais), impropres aux systèmes informatiques critiques tels que les systèmes avioniques, utilisant par ailleurs une ségrégation des flux au sein d'un réseau A664-P7, car la précision de l'heure ne peut être garantie de manière formelle du fait de l'approche statistique utilisée.

De plus la présente invention est basée sur l'utilisation d'une pluralité de serveurs propres à définir en commun une référence horaire précise ce qui rend robuste la synchronisation mise en œuvre selon l'invention.

En effet, l'utilisation d'un seul serveur n'est pas adaptée pour la détermination d'une référence horaire utilisable pour une fonction informatique critique telle qu'une fonction avionique.

De plus, la présente invention permet d'éviter de modifier le fonctionnement des commutateurs réseau 17, ce qui permet une mise en œuvre du procédé selon l'invention au sein de réseaux de communication existants 16.

En relation avec la figure 2, le procédé 24 de synchronisation mis en œuvre lorsque le dispositif avionique correspond à un serveur 12 est ci-après décrit.

Un tel procédé 24 de synchronisation mis en œuvre par le serveur comprend deux phases à savoir une phase d'initialisation 26 et une phase opérationnelle 28.

Dans la phase d'initialisation 26, le procédé 24 de synchronisation mis en œuvre par un serveur 12 courant, par exemple S_{A} comprend une première étape 30 d'initialisation de paramètres d'une fonction affine prédéterminée pour obtenir l'heure de référence Href associée au serveur 12 S_{A}.

En particulier, pour chaque serveur Sᵢ, ces paramètres correspondent à un facteur *coeff_{Si}* initialisé à un et à décalage *offset_{Si}* initialisé à l'opposé de la valeur d'horloge interne à l'instant d'initialisation -h_{int_tinit_Si}.

Puis pour chaque période P, selon une étape 32, le module de gestion de l'heure G_H du serveur courant S_{A} met en œuvre la transmission à son propre module de gestion des pannes G_P, de toute information (i.e. notification ou champs notification), associée à un module de gestion des pannes G_P d'au moins un serveur émetteur distinct du serveur courant S_{A}, et reçue au cours de la période précédente.

Comme indiqué précédemment cette étape 32 est suivie par l'étape 34 d'exécution de chaque action, non encore exécutée, reçue de son propre module de gestion des pannes G_P.

Une fois ces étapes 30 à 34 effectuée, le serveur en phase d'initialisation 26, met en œuvre une étape 36 de détermination de la référence horaire Href_{A} du serveur courant S_{A} par application de la fonction affine prédéterminée à la valeur de l'horloge interne du serveur courant à l'instant courant *t_{c},* tel que : ${Href}_{A} \left({t}_{c}\right) = {coeff}_{A} . {h}_{int_tc_SA} + {offset}_{A} = {h}_{int_tc_SA} - {h}_{int_tinit} .$

Selon l'étape 36, le serveur courant S_{A} émet ensuite un message de synchronisation comprenant un champ d'identification représentatif de la phase d'initialisation du module de gestion de l'heure du serveur courant S_{A}, à savoir par exemple INIT, et comprenant la référence horaire du serveur courant S_{A}, à savoir Href_{A}.

Puis deux variantes de la phase d'initialisation sont mises en œuvre selon le type de message de synchronisation reçu, INIT ou TIME, et en fonction du nombre de messages de synchronisation, autrement dit en fonction du nombre de serveurs distincts émetteurs de message de synchronisation.

Selon une première variante, si, selon une étape 38, le serveur courant S_{A} a reçu au moins un message INIT d'au moins (N - 1) serveurs distincts depuis l'entrée en phase d'initialisation 26, alors pour chaque dernier message INIT reçu de serveurs distincts (message reçu du serveur Sᵢ correspondant par exemple à S_{B} ou S_{C}, à l'instant tᵢ, et contenant la référence horaire Hrefᵢ), le module de gestion de l'heure du serveur courant S_{A}, selon une étape 40 met en œuvre l'estimation de l'heure courante du serveur émetteur, par exemple S_{B}, conformément à l'équation suivante à l'instant courant t_{c} : ${Hc}_{B} = {Href}_{B} + {h}_{int_tc_SA} - {h}_{int_ti_SA} + \left(BCTT\left({S}_{B}, {S}_{A}\right)+WCTT\left({S}_{B}, {S}_{A}\right)\right) / 2 .$

Puis cette étape 40, est suivie d'une étape 42 de détermination de la valeur maximale parmi les heures courantes des serveurs émetteurs estimées, par exemple en relation avec la figure 1, la valeur maximale Hmax des heures courantes Hc_{B} et Hc_{C} associées respectivement aux serveurs émetteurs S_{B} et S_{C}.

L'étape suivante 44 a comme rôle d'utiliser la valeur Hmax comme nouvelle référence horaire NHref_{A} associée au serveur S_{A}. Pour cela, lors de cette étape 44, le module de gestion de l'heure met en œuvre la mise à jour (i.e. de correction) des nouveaux paramètres Ncoeff_{A} et Noffset_{A} de la fonction affine associée au serveur S_{A} selon les équations suivantes et à utiliser lors de la période P suivante: ${Ncoeff}_{A} = 1 + \left({NHref}_{A}-{Href}_{A}\right) / P , et {Noffset}_{A} = {offset}_{A} + \left({coeff}_{A}-{Ncoeff}_{A}\right) . {h}_{int_tc_SA} .$

Une fois cette étape 44 mise en œuvre,la phase opérationnelle 28 est démarrée à la période P suivante.

Selon une deuxième variante, si, selon une étape 46, le serveur courant S_{A} a reçu au moins un message TIME (i.e. représentatif de la phase opérationnelle 28) d'au moins N serveurs distincts depuis l'entrée en phase d'initialisation 26, alors pour chaque dernier message TIME reçu de serveurs distincts (message reçu du serveur Sᵢ correspondant par exemple à S_{B} ou S_{C}, à l'instant tᵢ, et contenant la référence horaire Hrefᵢ), le module de gestion de l'heure du serveur courant S_{A}, selon une étape 48 met en œuvre l'estimation de l'heure courante du serveur émetteur, par exemple S_{B} conformément à l'équation suivante à l'instant courant t_{c} : ${Hc}_{B} = {Href}_{B} + {h}_{int_tc_SA} - {h}_{int_ti_SA} + \left(BCTT\left({S}_{B}, {S}_{A}\right)+WCTT\left({S}_{B}, {S}_{A}\right)\right) / 2 ,$ sinon les étapes 32 à 38 du procédé précédemment décrites sont réitérées à la période P suivante, jusqu'à ce que la condition de l'étape 38 soit satisfaite, à savoir la réception d'au moins un message INIT d'au moins (N - 1) serveurs distincts depuis l'entrée en phase d'initialisation 26, ou alors que la condition associée à l'étape 46, à savoir la réception d'au moins un message TIME (i.e. représentatif de la phase opérationnelle 28) d'au moins N serveurs distincts depuis l'entrée en phase d'initialisation 26.

Puis cette étape 48, est suivie d'une étape 50 de détermination de la valeur moyenne des heures courantes des serveurs émetteurs estimées, par exemple en relation avec la figure 1, la valeur moyenne Hmoy_{S} des heures courantes Hc_{B} et Hc_{C} associées respectivement aux serveurs émetteurs S_{B} et S_{C}.

L'étape suivante 52 a comme rôle d'utiliser la valeur Hmoy_{S} comme nouvelle référence horaire NHref_{A} associée au serveur S_{A}. Pour cela, lors de cette étape 52, le module de gestion de l'heure met en œuvre la mise à jour (i.e. de correction) des nouveaux paramètres Ncoeff_{A} et Noffset_{A} de la fonction affine associée au serveur S_{A} selon les équations suivantes et à utiliser lors de la période P suivante: ${Ncoeff}_{A} = 1 + \left({NHref}_{A}-{Href}_{A}\right) / P , et {Noffset}_{A} = {offset}_{A} + \left({coeff}_{A}-{Ncoeff}_{A}\right) . {h}_{int_tc_SA} .$

Une fois cette étape 52 mise en œuvre,la phase opérationnelle 28 est démarrée à la période P suivante.

Lorsque le serveur courant S_{A} est en phase opérationnelle 28, à chaque période P, le procédé de synchronisation comprend une étape 54, durant laquelle le module de gestion de l'heure G_H du serveur courant S_{A} met en œuvre la transmission à son propre module de gestion des pannes G_P, de toute information (i.e. notification ou champs notification), associée à un module de gestion des pannes G_P d'au moins un serveur émetteur distinct du serveur courant S_{A}, et reçue au cours de la période précédente.

Comme indiqué précédemment cette étape 54 est suivie par l'étape 56 d'exécution de chaque action, non encore exécutée, reçue de son propre module de gestion des pannes G_P.

Puis selon une étape 58, pour chaque dernier message TIME reçu de serveurs distincts (message reçu du serveur Sᵢ correspondant par exemple à S_{B} ou S_{C}, à l'instant tᵢ, et contenant la référence horaire Hrefᵢ), le module de gestion de l'heure du serveur courant S_{A} en phase opérationnelle 28 met en oeuvre :
- si l'instant de réception du message est antérieur de plus de deux périodes à l'instant courant, l'émission d'une information représentative d'une anomalie au module de gestion de panne du client courant et l'arrêt du traitement du message TIME reçu,
- sinon l'estimation de l'heure courante du serveur émetteur, par exemple S_{B} conformément à l'équation suivante à l'instant courant t_{c} : ${Hc}_{B} = {Href}_{B} + {h}_{int_tc_SA} - {h}_{int_ti_SA} + \left(BCTT\left({S}_{B}, {S}_{A}\right)+WCTT\left({S}_{B}, {S}_{A}\right)\right) / 2 .$

Puis cette étape 58, est suivie d'une étape 60 de détermination de la valeur moyenne de h_{int_tc_SA} et des heures courantes des serveurs émetteurs estimées, par exemple en relation avec la figure 1, la valeur moyenne Hmoy_{S} de h_{int_tc_SA} et des heures courantes Hc_{B} et Hc_{C} associées respectivement aux serveurs émetteurs S_{B} et S_{C}.

L'étape suivante 62 a comme rôle d'utiliser la valeur Hmoy_{S} comme nouvelle référence horaire NHref_{A} associée au serveur S_{A}. Pour cela, lors de cette étape 62, le module de gestion de l'heure met en œuvre la mise à jour (i.e. de correction) des nouveaux paramètres Ncoeff_{A} et Noffset_{A} de la fonction affine associée au serveur S_{A} selon les équations suivantes et à utiliser lors de la période P suivante: ${Ncoeff}_{A} = 1 + \left({NHref}_{A}-{Href}_{A}\right) / P , et {Noffset}_{A} = {offset}_{A} + \left({coeff}_{A}-{Ncoeff}_{A}\right) . {h}_{int_tc_SA} .$

Une fois cette étape 62 mise en œuvre,une étape 64 d'émission d'un message de synchronisation comprenant un champ d'identification TIME représentatif de la phase opérationnelle du serveur courant et contenant la nouvelle référence horaire NHref_{A} associée au serveur S_{A} est mise en œuvre.

En relation avec la figure 3, le procédé 66 de synchronisation mis en œuvre lorsque le dispositif avionique correspond à un client 14 est ci-après décrit.

Un tel procédé 66 de synchronisation mis en œuvre par le client comprend également deux phases à savoir une phase d'initialisation 68 et une phase opérationnelle 70.

Dans la phase d'initialisation 68, à chaque période P, le procédé 66 de synchronisation mis en œuvre par un client 14 courant, par exemple C₁ comprend une première étape 72 dans laquelle le module de gestion de l'heure G_H du client courant C₁ met en œuvre la transmission à son propre module de gestion des pannes G_P, de toute information (i.e. notification ou champs notification), associée à un module de gestion des pannes G_P d'au moins un serveur émetteur, et reçue au cours de la période précédente.

Comme indiqué précédemment cette étape 72 est suivie par l'étape 74 d'exécution de chaque action, non encore exécutée, reçue de son propre module de gestion des pannes G_P.

Puis selon une étape 76, si un premier message TIME (i.e. représentatif de la phase opérationnelle 28 d'un serveur émetteur) est reçu d'un serveur (message reçu du serveur Sᵢ correspondant par exemple à S_{A}, S_{B} ou S_{C}, à l'instant tᵢ, et contenant la référence horaire Hrefᵢ), le module de gestion de l'heure du client courant C₁ met en œuvre selon une étape 78, l'estimation de l'heure courante du serveur émetteur, par exemple S_{B}, conformément à l'équation suivante à l'instant courant t_{c} : ${Hc}_{B} = {Href}_{B} + {h}_{int_tc_C1} - {h}_{int_ti_C1} + \left(BCTT\left({S}_{B}, {S}_{1}\right)+WCTT\left({S}_{B}, {S}_{1}\right)\right) / 2 ,$ sinon les étapes 72 et 74 de transmission d'information de notification et d'exécution d'action sont réitérées à la période P suivante, jusqu'à ce qu'un message TIME soit reçu.

La valeur Hc_{B} est alors sélectionnée par le client courant C₁, selon une étape 80, comme sa nouvelle référence horaire H_{C1}= Hc_{B}. Pour cela, lors de cette étape 80, le module de gestion de l'heure met en œuvre l'initialisation de paramètres de la fonction affine applicable à la valeur de l'horloge interne du client courant Cᵢ. Ces paramètres correspondent à un facteur *coeff_{C1}* initialisé à un et à un décalage *offset_{C1}* initialisé sous la forme : *offset_{C1}*=H_{C1}*-*h_{int_tc_C1} à l'instant courant *tc* de mise en œuvre de l'étape d'initialisation 80.

Une fois cette étape 80 mise en œuvre,la phase opérationnelle 70 est démarrée à la période P suivante.

En phase opérationnelle 70 du client courant, le procédé 66 comprend alors à chaque période P, une première étape 82 dans laquelle le module de gestion de l'heure G_H du client courant C₁ met en œuvre la transmission à son propre module de gestion des pannes G_P, de toute information (i.e. notification ou champs notification), associée à un module de gestion des pannes G_P d'au moins un serveur émetteur, et reçue au cours de la période précédente.

Comme indiqué précédemment cette étape 82 est suivie par l'étape 84 d'exécution de chaque action, non encore exécutée, reçue de son propre module de gestion des pannes G_P.

Puis, pour chaque dernier message TIME reçu par le client courant, par exemple C₁, de serveurs distincts (message reçu du serveur Sᵢ correspondant par exemple à S_{A}, S_{B} ou S_{C}, à l'instant tᵢ, et contenant la référence horaire Hrefᵢ), selon une étape 86, si l'instant de réception tᵢ du message est antérieur de plus de deux périodes P à l'instant courant t_{c} (autrement dit si t_{c}-tᵢ>2P), l'émission d'une information représentative d'une anomalie au module de gestion de panne du client courant et l'arrêt du traitement de ce message est mis en œuvre.

Sinon le module de gestion de l'heure du client courant C₁ met en œuvre selon une étape 90, l'estimation de l'heure courante du serveur émetteur, par exemple S_{B} conformément à l'équation suivante à l'instant courant t_{c} : ${Hc}_{B} = {Href}_{B} + {h}_{int_tc_C1} - {h}_{int_ti_C1} + \left(BCTT\left({S}_{B}, {S}_{1}\right)+WCTT\left({S}_{B}, {S}_{1}\right)\right) / 2 .$

Puis, selon une étape 92, le module de gestion de l'heure du client courant C₁ met en œuvre la détermination de la valeur moyenne Hmoy_{C} des heures courantes Hc_{A}, Hc_{B} et Hc_{C} associées respectivement aux serveurs émetteurs S_{A}, S_{B} et S_{C}.

Selon une étape 94, si la valeur absolue de la différence entre d'une part la référence horaire Href_{C1} du client courant C₁ obtenue par application d'une fonction affine à la valeur de l'horloge interne h_{int_tc_C1} du client courant C₁ à l'instant courant t_{c}, et d'autre part l'heure courante moyenne Hmoy_{C} est supérieure à un seuil prédéterminé correspondant à la donnée de précision P_{R} du fichier de configuration du client courant considéré, par exemple C₁, alors l'émission d'une information représentative d'une anomalie (i.e. panne) au module de gestion de panne G_P du client courant C₁ est mise en œuvre.

Autrement dit, avec Href_{C1} = coeff_{C1}. h_{int_tc_C1}+offset_{C1}, si |*Hmoy_{C}* ― Href_{C1}| > *P_{R}*, alors une panne est signifiée par le module de gestion de l'heure G_H du client courant C₁ à son propre module de gestion de panne G_P.

Puis, selon l'étape 96, la nouvelle référence horaire du client courant C₁ NHref_{C1} correspond alors à l'heure courante moyenne Hmoy_{C} et la mise à jour de nouvelles valeurs des paramètres Ncoeff_{C1} et Noffset_{C1} de la fonction affine associée au client courant C₁ est mise en œuvre selon les équations suivantes et à utiliser lors de la période P suivante: ${Ncoeff}_{C1} = 1 + \left({NHref}_{C1}-{Href}_{C1}\right) / P , et {Noffset}_{C1} = {offset}_{C1} + \left({coeff}_{C1}-{Ncoeff}_{C1}\right) . {h}_{int_tc_C1} .$

Ainsi, le système de synchronisation selon la présente invention met en œuvre une pluralité de serveurs 12 qui définissent en commun une heure précise. Cette heure commune est ensuite envoyée aux clients 14. Le système selon la présente invention ne nécessite aucune fonction spécifique des commutateurs réseau ce qui permet à la fois la conservation du ou des réseau(x) existant(s), sans impact matériel ni logiciel sur les équipements de réseau déjà installés, et une amélioration de l'intégrité des réseaux, en surveillant le temps de traversée des messages.

## Revendications

1. Procédé (24, 66) de synchronisation d'un ensemble (10) de dispositifs informatiques critiques, en particulier des dispositifs avioniques, interconnectés à un réseau (16) de communication d'un véhicule, et comprenant chacun ur module de gestion de l'heure (G_P), l'ensemble de dispositifs informatiques critiques comprenant au moins une pluralité de serveurs (12) de référence horaire, et une pluralité de clients (14), chaque dispositif informatique critique étant connecté à au moins un autre dispositif informatique critique par une liaison virtuelle (18, 20), chaque point de terminaison d'une liaison virtuelle étant associé à une valeur minimale, BCTT, et à une valeur maximale, WCTT, de temps de transmission d'un paquet de données sur la liaison virtuelle, le procédé (24, 66) de synchronisation étant mis en œuvre et réitéré périodiquement par le module de gestion de l'heure (G_P) de chaque dispositif informatique critique courant de l'ensemble (10) de dispositifs informatiques critiques et comprenant au moins:
- la réception (38, 46, 76, 86) d'au moins un message de synchronisation transmis par un serveur (12) émetteur distinct dudit dispositif informatique critique courant, chaque message étant associé à un instant de réception (tᵢ) et comprenant au moins une référence horaire, Hrefᵢ, déterminée par le serveur (12) émetteur,
- pour chaque message de synchronisation reçu, l'estimation (40, 48, 58, 78, 90) de l'heure courante du serveur (12) émetteur à partir d'un quintuplet de paramètres comprenant :
▪ la référence horaire, Hrefᵢ,
▪ une valeur, h_{int_tc_di}, de l'horloge interne du dispositif informatique critique courant à l'instant courant,
▪ une valeur, h_{int_ti_di}, de l'horloge interne du dispositif informatique critique courant à l'instant de réception,
▪ la valeur minimale, BCTT(Sᵢ, dᵢ), et la valeur maximale, WCTT(Sᵢ, dᵢ), de temps de transmission associée à la liaison virtuelle entre le serveur émetteur (Sᵢ) et le dispositif informatique critique, dᵢ, courant.

2. Procédé (24, 66) de synchronisation selon la revendication 1, dans lequel la période, P, de réitération du procédé est conforme à la relation suivante : $P < min \left[\begin{matrix}{min}_{serveur s} \left[\frac{{P}_{R} - {max}_{serveur {s}^{′}} \left(G\left({s}^{′}, s\right)\right) - {max}_{serveur {s}^{′}} \left[WCTT\left({s}^{′}, s\right).\left(D\left(s\right)+D\left({s}^{′}\right)\right)\right]}{M . \left(D\left(s\right)+{max}_{serveur {s}^{′}}D\left({s}^{′}\right)\right)}\right] , \\ {min}_{client c , serveur s} \left[\frac{{P}_{R} - G \left(s, c\right)}{D \left(c\right) + D \left(s\right)}-WCTT\left(s, c\right)\right]\end{matrix}\right]$ avec :
- G (s',s) la différence temporelle entre les meilleur, BCTT, et pire, WCTT, temps théoriques de transmission d'un paquet transmis dans la liaison virtuelle entre deux serveurs (12),
- P_{R} une donnée de précision correspondant à l'écart maximal acceptable entre la référence horaire de deux dispositifs informatiques,
- D un taux de dérive maximal de l'horloge interne (Hᵢ) d'un dispositif informatique critique ;
- M le nombre de dispositifs informatiques critiques dudit ensemble.

3. Procédé (24, 66) de synchronisation selon la revendication 1 ou 2, dans lequel chaque dispositif informatique critique comprend également un module de gestion des pannes (G_P) de synchronisation propre à être détectée(s) lors de la mise en œuvre dudit procédé (24, 66), et dans lequel le procédé comprend, au cours d'une période courante, préalablement à la réception d'au moins un message de synchronisation et à l'estimation de l'heure courante du serveur (12) émetteur :
- la transmission (32, 54, 72, 82), par le module de gestion de l'heure (G_H) du dispositif informatique critique courant, à son propre module de gestion des pannes (G_P), de toute information, associée à un module de gestion des pannes (G_H) d'au moins un serveur (12) émetteur distinct du dispositif informatique critique courant, et reçue au cours de la période précédente,
- l'exécution (34, 56, 74, 84) de chaque action, non encore exécutée, reçue de son propre module de gestion des pannes.

4. Procédé (24) de synchronisation selon la revendication 1 ou 2, le dispositif informatique critique courant étant un serveur (12) courant parmi la pluralité de serveurs (12), chaque serveur (12) étant connecté à chaque autre serveur et à chaque client par une liaison virtuelle de synchronisation (18),
dans lequel, au cours d'une phase d'initialisation (26), le procédé comprend, préalablement à la réception (38, 46) d'au moins un message de synchronisation et à l'estimation (40, 48) de l'heure courante du serveur (12) émetteur:
- la détermination (34) d'une référence horaire du serveur (12) courant par application d'une fonction affine prédéterminée à la valeur de l'horloge interne du serveur (12) courant à l'instant courant, la fonction affine étant associée à un facteur et à un décalage dont les valeurs sont préalablement initialisées à des valeurs initiales prédéterminées,
- l'émission (36) d'un message de synchronisation comprenant un champ d'identification représentatif de la phase d'initialisation du module de gestion de l'heure (G_H) du serveur (12) courant et comprenant la référence horaire du serveur (12) courant.

5. Procédé (24) de synchronisation selon la revendication 4, dans lequel successivement à l'estimation (40) de l'heure courante du serveur émetteur mise en œuvre,pour chaque message de synchronisation reçu comprenant un champ d'identification représentatif de la phase d'initialisation d'un serveur émetteur distinct, et mise en œuvre dès qu'un premier nombre prédéterminé de messages de synchronisation reçus, est atteint, le procédé comprend :
- la détermination (42) d'une nouvelle référence horaire correspondant à l'heure courante maximale obtenue à partir des heures courantes associées à chaque message,
- la mise à jour (44) du facteur et du décalage de la fonction affine en fonction de ladite nouvelle référence horaire,
- le démarrage (44) d'une phase opérationnelle (28) du module de gestion de l'heure du serveur courant.

6. Procédé (24) de synchronisation selon la revendication 4, dans lequel successivement à l'estimation (48) de l'heure courante du serveur (12) émetteur mise en œuvre,pour chaque message de synchronisation reçu comprenant un champ d'identification représentatif de la phase opérationnelle (28) d'un serveur (12) émetteur distinct, et mise en œuvre dès qu'un deuxième nombre prédéterminé de messages de synchronisation reçus, est atteint, le procédé comprend :
- la détermination (50) d'une nouvelle référence horaire correspondant à l'heure courante moyenne obtenue à partir des heures courantes associées à chaque message,
- la mise à jour (52) du facteur et du décalage de la fonction affine en fonction de ladite nouvelle référence horaire,
- le démarrage (52) de la phase opérationnelle (28) du module de gestion de l'heure du serveur courant.

7. Procédé (24) de synchronisation selon les revendications 3 et 5, le dispositif informatique critique courant étant un serveur (12) courant parmi la pluralité de serveurs, chaque serveur (12) étant connecté à chaque autre serveur et à chaque client par une liaison virtuelle de synchronisation (18),
dans lequel, au cours de la phase opérationnelle (28), le procédé comprend :
- pour chaque message de synchronisation reçu comprenant un champ d'identification représentatif de la phase opérationnelle (28) d'un serveur (12) émetteur distinct :
- si l'instant de réception du message est antérieur de plus de deux périodes à l'instant courant, l'émission d'une information représentative d'une anomalie au module de gestion de panne (G_P) du client courant et l'arrêt du traitement du message,
- sinon ladite estimation (58) de l'heure courante associée audit message
- la détermination (60) d'une nouvelle référence horaire correspondant à l'heure courante moyenne obtenue à partir de l'heure courante du serveur courant et des heures courantes associées à chaque message,
- la mise à jour (62) du facteur et du décalage de la fonction affine en fonction de ladite nouvelle référence horaire, et
- l'émission (64) d'un message de synchronisation comprenant un champ d'identification représentatif de la phase opérationnelle du serveur courant et contenant ladite référence horaire du serveur courant.

8. Procédé (66) de synchronisation selon l'une quelconque des revendications 1 à 3, le dispositif informatique critique courant étant un client (14) courant parmi la pluralité de clients (14), chaque client (14) étant connecté à chaque serveur (12) de la pluralité de serveurs (12) par une liaison virtuelle de synchronisation (18),
dans lequel, au cours d'une phase d'initialisation (68), successivement à l'estimation (78) de l'heure courante du serveur émetteur mise en œuvre à partir du premier message de synchronisation reçu comprenant un champ d'identification représentatif de la phase opérationnelle (28) d'un serveur (12) émetteur distinct, le procédé comprend :
- la mise à jour de la référence horaire du client courant égale à l'heure courante associée audit message,
- l'initialisation (80) des valeurs initiales de facteur et de décalage d'une fonction affine applicable à la valeur de l'horloge interne du client courant,
- le démarrage (80) de la phase opérationnelle du module de gestion de l'heure du client courant.

9. Procédé (66) de synchronisation selon la revendication 3, le dispositif informatique critique courant étant un client (14) courant parmi la pluralité de clients (14), chaque client (14) étant connecté à chaque serveur (12) de la pluralité de serveurs (12) par une liaison virtuelle de synchronisation (18),
dans lequel, au cours d'une phase opérationnelle (70), le procédé comprend :
- pour chaque message de synchronisation reçu comprenant un champ d'identification représentatif de la phase opérationnelle (68) d'un serveur (12) émetteur distinct :
- si l'instant de réception du message est antérieur de plus de deux périodes à l'instant courant, l'émission d'une information représentative d'une anomalie au module de gestion de panne (G_P) du client (14) courant et l'arrêt du traitement du message,
- sinon ladite estimation (90) de l'heure courante associée audit message,
- si la valeur absolue de la différence entre, d'une part une référence horaire du client (14) courant obtenue par application d'une fonction affine à la valeur de l'horloge interne du client courant à l'instant courant t_{c}, et d'autre part l'heure courante moyenne obtenue (92) à partir des heures courantes associées à chaque message est supérieure à un seuil prédéterminé de précision, l'émission (94) d'une information représentative d'une anomalie au module de gestion de panne (G_P) du client courant,
- détermination d'une nouvelle référence horaire correspondant à l'heure courante moyenne obtenue à partir des heures courantes associées à chaque message, et
- mise à jour du facteur et du décalage de la fonction affine du client (14) courant en fonction de ladite nouvelle référence horaire.

10. Système (10) de synchronisation d'un ensemble de dispositifs informatiques critiques, en particulier des dispositifs avioniques, interconnectés à un réseau (16) de communication d'un véhicule, et comprenant chacun un module de gestion de l'heure (G_H), l'ensemble de dispositifs informatiques critiques comprenant au moins une pluralité de serveurs (12) de référence horaire, et une pluralité de clients (14), chaque dispositif informatique critique étant connecté à un au moins un autre dispositif informatique critique par une liaison virtuelle (18, 20), chaque point de terminaison d'une liaison virtuelle étant associée à une valeur minimale, BCTT, et une valeur maximale, WCTT, de temps de transmission d'un paquet de données sur ladite liaison virtuelle (18, 20),
le module de gestion de l'heure (G_H) de chaque dispositif informatique critique courant étant propre à mettre en œuvre et à réitérer périodiquement au moins:
- la réception (38, 46, 76, 86) d'au moins un message de synchronisation transmis par un serveur émetteur distinct dudit dispositif informatique critique courant, chaque message étant associé à un instant de réception et comprenant au moins une référence horaire, Hrefᵢ, déterminée par ledit serveur émetteur,
- pour chaque message de synchronisation reçu, l'estimation (40, 48, 58, 78, 90) de l'heure courante du serveur émetteur à partir d'un quintuplet de paramètres comprenant :
▪ ladite référence horaire, Hrefᵢ,
▪ une valeur, h_{int_tc_di}, de l'horloge interne du dispositif informatique critique courant à l'instant courant,
▪ une valeur, h_{int_ti_di}, de l'horloge interne du dispositif informatique critique courant à l'instant de réception,
▪ la valeur minimale, BCTT(Sᵢ, dᵢ), et la valeur maximale, WCTT(Sᵢ, dᵢ), de temps de transmission associée à la liaison virtuelle entre le serveur émetteur (Sᵢ) et le dispositif informatique critique, dᵢ, courant.

## Patentansprüche

1. Verfahren (24, 66) zur Synchronisation einer Einheit (10) von kritischen Rechenvorrichtungen, insbesondere Avionikvorrichtungen, die mit einem Fahrzeugkommunikationsnetz (16) verbunden sind und jeweils umfassend ein Zeitverwaltungsmodul (G_P), die Einheit von kritischen Rechenvorrichtungen umfassend mindestens eine Vielzahl von Zeitreferenzservern (12) und eine Vielzahl von Clients (14), wobei jede kritische Rechenvorrichtung durch eine virtuelle Verbindung (18) mit mindestens einer weiteren kritischen Rechenvorrichtung verbunden ist, (20), wobei jeder Endpunkt einer virtuellen Verbindung mit einem Minimalwert, BCTT, und einem Maximalwert, WCTT, der Übertragungszeit Datenpakets über die virtuelle Verbindung assoziiert ist, wobei das Synchronisationsverfahren (24, 66) durch das Zeitverwaltungsmodul (G_P) von jeder aktuellen kritischen Rechenvorrichtung der Einheit (10) von kritischen Rechenvorrichtungen implementiert und periodisch wiederholt wird und mindestens Folgendes umfassend:
- den Empfang (38, 46, 76, 86) mindestens einer Synchronisationsnachricht, die von einem anderen sendenden Server (12) als die aktuelle kritische Rechenvorrichtung übertragen wird, wobei jede Nachricht mit einer Empfangszeit (ti) assoziiert ist und mindestens eine Zeitreferenz Hrefᵢ umfasst, die von dem sendenden Server (12) bestimmt wird,
- für jede empfangene Synchronisationsnachricht, die Schätzung (40, 48, 58, 78, 90) der aktuellen Zeit des sendenden Servers (12) anhand von fünf Parametern, umfassend:
▪ die Zeitreferenz, Hrefᵢ,
▪ einen Wert, h_{int_tc_di}, der internen Uhr der aktuellen kritischen Rechenvorrichtung zum aktuellen Zeitpunkt,
▪ einen F-Wert, h_{int_ti_di}, der internen Uhr der aktuellen kritischen Rechenvorrichtung zum Zeitpunkt des Empfangs,
▪ den Minimalwert F, BCTT(Sᵢ, dᵢ), und den Maximalwert, WCTT(Sᵢ, dᵢ), der Übertragungszeit, die mit der virtuellen Verbindung zwischen dem sendenden Server (Sᵢ) und der aktuellen kritischen Rechenvorrichtung, dᵢ, assoziiert ist.

2. Verfahren (24, 66) zur Synchronisation nach Anspruch 1, wobei die Periode P der Wiederholung des Verfahrens der folgenden Beziehung entspricht: $P < min \left[\begin{matrix}{min}_{Server s} \left[\frac{{P}_{R} - {max}_{Server {s}^{′}} \left(G\left({s}^{′}, s\right)\right) - {max}_{Server {s}^{′}} \left[WCTT\left({s}^{′}, s\right).\left(D\left(s\right)+D\left({s}^{′}\right)\right)\right]}{M . \left(D\left(s\right)+{max}_{Server {s}^{′}}D\left({s}^{′}\right)\right)}\right] , \\ {min}_{Client c , S erver s} \left[\frac{{P}_{R} - G \left(s, c\right)}{D \left(c\right) + D \left(s\right)}-WCTT\left(s, c\right)\right]\end{matrix}\right]$ wobei:
- G (s',s) die Zeitdifferenz zwischen den besten, BCTT, und der schlechtesten, WCTT, theoretischen Übertragungszeiten eines Pakets ist, das über die virtuelle Verbindung zwischen zwei Servern (12) übertragen wird,
- P_{R} eine Präzisionsangabe ist, die der maximal zulässigen Abweichung zwischen der Zeitreferenz von zwei Rechenvorrichtungen entspricht,
- D eine maximale Driftrate der internen Uhr (Hi) einer kritischen Rechenvorrichtung ist;
- M die Anzahl der kritischen Rechenvorrichtungen der Einheit ist.

3. Synchronisationsverfahren (24, 66) nach Anspruch 1 oder 2, wobei jede kritische Rechnervorrichtung auch ein Fehlerverwaltungsmodul (G_P) der Synchronisation umfasst, die bei der Durchführung des Verfahrens (24, 66) erfasst werden können, und wobei das Verfahren im Verlauf einer aktuellen Periode vor dem Empfang mindestens einer Synchronisationsnachricht die Schätzung der aktuellen Zeit des sendenden Servers (12) Folgendes umfasst:
- die Übertragung (32, 54, 72, 82), durch das Zeitverwaltungsmodul (G_H) der aktuellen kritischen Rechenvorrichtung an sein eigenes Fehlerverwaltungsmodul (G_P), von allen Informationen, die mit einem Fehlerverwaltungsmodul (G_H) mindestens eines von der aktuellen kritischen Rechenvorrichtung getrennten sendenden Servers (12) assoziiert sind und im Verlauf der vorherigen Periode empfangen werden,
- die Ausführung (34, 56, 74, 84) jeder noch nicht ausgeführten Aktion, die von seinem eigenen Fehlerverwaltungsmodul empfangen wird.

4. Synchronisationsverfahren (24) nach Anspruch 1 oder 2, wobei die aktuelle kritische Rechenvorrichtung ein aktueller Server (12) aus der Vielzahl von Servern (12) ist, wobei jeder Server (12) durch eine virtuelle Synchronisationsverbindung (18) mit jedem anderen Server und mit jedem Client verbunden ist,
wobei das Verfahren im Verlauf einer Initialisierungsphase (26) vor dem Empfang (38, 46) mindestens einer Synchronisationsnachricht und der Schätzung (40, 48) der aktuellen Zeit des sendenden Servers (12) Folgendes umfasst:
- die Bestimmung (34) einer Zeitreferenz des aktuellen Servers (12) durch Anwenden einer vorbestimmten affinen Funktion auf den Wert der internen Uhr des aktuellen Servers (12) zum aktuellen Zeitpunkt, wobei die affine Funktion mit einem Faktor und einem Offset assoziiert ist, deren Werte vorher auf vorbestimmte Anfangswerte initialisiert werden,
- die Sendung (36) einer Synchronisationsnachricht, umfassend ein Identifikationsfeld, das für die Initialisierungsphase des Zeitverwaltungsmoduls (G_H) des aktuellen Servers (12) repräsentativ ist und die Zeitreferenz des aktuellen Servers (12) umfasst.

5. Synchronisationsverfahren (24) nach Anspruch 4, wobei das Verfahren nach der Schätzung (40) der aktuellen Zeit des eingesetzten sendenden Servers, für jede empfangene Synchronisationsnachricht umfassend ein Identifizierungsfeld, das repräsentativ für die Initialisierungsphase eines anderen sendenden Servers ist, und sobald eine erste vorbestimmte Anzahl von empfangenen Synchronisationsnachrichten erreicht ist, Folgendes umfasst:
- die Bestimmung (42) einer neuen Zeitreferenz, die der maximalen aktuellen Zeit entspricht, die anhand der aktuellen Zeiten erlangt wird, die mit jeder Nachricht assoziiert ist,
- die Aktualisierung (44) des Faktors und des Offsets der affinen Funktion abhängig von der neuen Zeitreferenz,
- den Beginn (44) einer Betriebsphase (28) des Zeitverwaltungsmoduls des aktuellen Servers.

6. Synchronisationsverfahren (24) nach Anspruch 4, wobei das Verfahren nach der Schätzung (48) der aktuellen Zeit des eingesetzten sendenden Servers (12), für jede empfangene Synchronisationsnachricht umfassend ein Identifizierungsfeld, das repräsentativ für die Betriebsphase (28) eines anderen sendenden Servers (12) ist, und sobald eine zweite vorbestimmte Anzahl von empfangenen Synchronisationsnachrichten erreicht ist, Folgendes umfasst:
- die Bestimmung (50) einer neuen Zeitreferenz, die der mittleren aktuellen Zeit entspricht, die anhand der aktuellen Zeiten erlangt wird, die mit jeder Nachricht assoziiert ist,
- die Aktualisierung (52) des Faktors und des Offsets der affinen Funktion abhängig von der neuen Zeitreferenz,
- den Beginn (52) der Betriebsphase (28) des Zeitverwaltungsmoduls des aktuellen Servers.

7. Synchronisationsverfahren (24) nach der Ansprüche 3 und 5, wobei die aktuelle kritische Rechenvorrichtung ein aktueller Server (12) aus der Vielzahl von Servern ist, wobei jeder Server (12) mit jedem anderen Server und mit jedem Client durch eine virtuelle Synchronisationsverbindung (18) verbunden ist,
wobei das Verfahren im Verlauf der Betriebsphase (28) Folgendes umfasst:
- für jede empfangene Synchronisationsnachricht umfassend ein Identifizierungsfeld, das repräsentativ für die Betriebsphase (28) eines anderen sendenden Servers (12) ist:
- wenn der Zeitpunkt des Empfangs der Nachricht mehr als zwei Perioden vor dem aktuellen Zeitpunkt ist, die Sendung von Informationen, die repräsentativ für eine Anomalie sind, an das Fehlerverwaltungsmodul (G_P) des aktuellen Clients und die Unterbrechung der Verarbeitung der Nachricht,
- sonst die Schätzung (58) der aktuellen Zeit, die mit der Nachricht assoziiert ist
- die Bestimmung (60) einer neuen Zeitreferenz, die der mittleren aktuellen Zeit entspricht, die aus der aktuellen Zeit des aktuellen Servers und den mit jeder Nachricht assoziierten aktuellen Zeiten erlangt wird,
- die Aktualisierung (62) des Faktors und des Offsets der affinen Funktion abhängig von der neuen Zeitreferenz, und
- die Sendung (64) einer Synchronisationsnachricht umfassend ein Identifizierungsfeld, das repräsentativ für die Betriebsphase des aktuellen Servers ist und die Zeitreferenz des aktuellen Servers enthält.

8. Verfahren (66) zur Synchronisation nach einem der Ansprüche 1 bis 3, wobei die aktuelle kritische Rechenvorrichtung ein aktueller Client (14) der Vielzahl von Clients (14) ist, wobei jeder Client (14) durch eine virtuelle Synchronisationsverbindung (18) mit jedem Server (12) der Vielzahl von Servern (12) verbunden ist,
wobei das Verfahren im Verlauf einer Initialisierungsphase (68) nach der Schätzung (78) der aktuellen Zeit des eingesetzten sendenden Servers anhand der ersten empfangenen Synchronisationsnachricht, umfassend ein Identifizierungsfeld, das repräsentativ für die Betriebsphase (28) eines anderen sendenden Servers (12) ist, Folgendes umfasst:
- die Aktualisierung der Zeitreferenz des aktuellen Clients auf die mit dieser Nachricht assoziierte aktuelle Zeit,
- die Initialisierung (80) der Anfangswerte des Faktors und des Offsets einer affinen Funktion, die auf den internen Zeitwert des aktuellen Clients anwendbar ist,
- den Beginn (80) der Betriebsphase des Zeitverwaltungsmoduls des aktuellen Clients.

9. Synchronisationsverfahren (66) nach Anspruch 3, wobei die aktuelle kritische Rechenvorrichtung ein aktueller Client (14) der Vielzahl von Clients (14) ist, wobei jeder Client (14) durch eine virtuelle Synchronisationsverbindung (18) mit jedem Server (12) der Vielzahl von Servern (12) verbunden ist,
wobei das Verfahren im Verlauf einer Betriebsphase (70) Folgendes umfasst:
- für jede empfangene Synchronisationsnachricht umfassend ein Identifizierungsfeld, das repräsentativ für die Betriebsphase (68) eines anderen sendenden Servers (12) ist:
- wenn der Zeitpunkt des Empfangs der Nachricht mehr als zwei Perioden vor dem aktuellen Zeitpunkt ist, die Sendung von Informationen, die repräsentativ für eine Anomalie sind, an das Fehlerverwaltungsmodul (G_P) des aktuellen Clients (14) und die Unterbrechung der Verarbeitung der Nachricht,
- sonst die Schätzung (90) der aktuellen Zeit, die mit der Nachricht assoziiert ist,
- wenn der Absolutwert der Differenz zwischen einerseits einer Zeitreferenz des aktuellen Clients (14), die durch Anwendung einer affinen Funktion auf den Wert der internen Zeit des aktuellen Clients zur aktuellen Zeit t_{c} erlangt wird, und andererseits der mittleren aktuellen Zeit, die aus den aktuellen Zeiten, die mit jeder Nachricht assoziiert sind, erlangt wird (92), größer ist als ein vorbestimmter Genauigkeitsschwellenwert, die Sendung (94) von Informationen, die repräsentativ für eine Anomalie ist, an das Fehlerverwaltungsmodul (G_P) des aktuellen Clients,
- die Bestimmung einer neuen Zeitreferenz, die der mittleren aktuellen Zeit entspricht, die anhand der aktuellen Zeiten erlangt wird, die mit jeder Nachricht assoziiert ist, und
- die Aktualisierung des Faktors und des Offsets der affinen Funktion des aktuellen Clients (14) abhängig von der neuen Zeitreferenz.

10. System (10) zum Synchronisieren einer Einheit von kritischen Rechenvorrichtungen, insbesondere Avionikvorrichtungen, die mit einem Fahrzeugkommunikationsnetz (16) verbunden sind und jeweils umfassend ein Zeitmanagementmodul (G_H), die Einheit von kritischen Rechenvorrichtungen umfassend mindestens eine Vielzahl von Zeitreferenzservern (12) und eine Vielzahl von Clients (14), wobei jede kritische Rechenvorrichtung durch eine virtuelle Verbindung (18, 20) mit mindestens einer weiteren kritischen Rechenvorrichtung verbunden ist, wobei jeder Endpunkt einer virtuellen Verbindung mit einem Minimalwert, BCTT, einem Maximalwert, WCTT, der Übertragungszeit eines Datenpakets auf der virtuellen Verbindung (18, 20) assoziiert ist, wobei das Zeitverwaltungsmodul (G_H) von jeder aktuellen kritischen Rechenvorrichtung angepasst ist, um mindestens Folgendes zu implementieren und periodisch zu wiederholen:
- den Empfang (38, 46, 76, 86) mindestens einer Synchronisationsnachricht, die von einem anderen sendenden Server als die aktuelle kritische Rechenvorrichtung übertragen wird, wobei jede Nachricht mit einer Empfangszeit assoziiert ist und mindestens eine Zeitreferenz Hrefᵢ umfasst, die von dem sendenden Server bestimmt wird,
- für jede empfangene Synchronisationsnachricht, die Schätzung (40, 48, 58, 78, 90) der aktuellen Zeit des sendenden Servers anhand von fünf Parametern, umfassend:
▪ die Zeitreferenz, Hrefᵢ,
▪ einen Wert, h_{int_tc_di}, der internen Uhr der aktuellen kritischen Rechenvorrichtung zum aktuellen Zeitpunkt,
▪ einen F-Wert, h_{int_ti_di}, der internen Uhr der aktuellen kritischen Rechenvorrichtung zum Zeitpunkt des Empfangs,
▪ den Minimalwert F, BCTT(Sᵢ, dᵢ), und den Maximalwert, WCTT(Sᵢ, dᵢ), der Übertragungszeit, die mit der virtuellen Verbindung zwischen dem sendenden Server (Sᵢ) und der aktuellen kritischen Rechenvorrichtung, dᵢ, assoziiert ist.

## Claims

1. A method (24, 66) for synchronizing a set (10) of interconnected critical computing devices, in particular avionics devices, with a communication network (16) of a vehicle, and each comprising a time management module (G_P), the set of critical computing devices comprising at least one plurality of time reference servers (12), and a plurality of clients (14), each critical computing device being connected to at least one other critical computing device by a virtual link (18, 20), each termination point of a virtual link being associated with a minimum value BCTT and a maximum value WCTT of transmission time for a data packet over the virtual link,
the synchronization method (24, 66) being implemented and reiterated periodically by the time management module (G_P) of each current critical computing device of the set (10) of interconnected critical computing devices and comprising at least:
- receiving (38, 46, 76, 86) at least one synchronization message transmitted by a sending server (12) separate from said current critical computing device, each message being associated with a reception instant (tᵢ) and comprising at least one time reference Hrefᵢ determined by the sending server (12),
- for each received synchronization message, estimating (40, 48, 58, 78, 90) the current time of the sending server (12) from a quintuplet of parameters comprising:
▪ the time reference Hrefᵢ,
▪ a value h_{int_tc_di} of the internal clock of the current critical computing device at the current instant,
▪ a value h_{int_ti_di} of the internal clock of the current critical computing device at the reception instant,
▪ the minimum value BCTT(Sᵢ, dᵢ) and the maximum value WCTT(Sᵢ, dᵢ) of transmission time associated with the virtual link between the sending server (Sᵢ) and the current critical computing device (dᵢ).

2. The synchronization method (24, 66) according to claim 1, wherein the reiteration period P of the method is according to the following relationship: $P < min \left[\begin{matrix}{min}_{server s} \left[\frac{{P}_{R} - {max}_{server {s}^{′}} \left(G\left({s}^{′}, s\right)\right) - {max}_{server {s}^{′}} \left[WCTT\left({s}^{′}, s\right).\left(D\left(s\right)+D\left({s}^{′}\right)\right)\right]}{M . \left(D\left(s\right)+{max}_{server {s}^{′}}D\left({s}^{′}\right)\right)}\right] , \\ {min}_{client c , s erver s} \left[\frac{{P}_{R} - G \left(s, c\right)}{D \left(c\right) + D \left(s\right)}-WCTT\left(s, c\right)\right]\end{matrix}\right]$ with:
- G(s',s) the time difference between the best BCTT and worst WCTT theoretical transmission times of a packet transmitted in the virtual link between two servers (12),
- P_{R} a precision datum corresponding to the maximum acceptable gap between the time reference of two computer devices,
- D a maximum drift rate of the internal clock (Hᵢ) of a critical computing device;
- M the number of critical computing devices of said assembly.

3. The synchronization method (24, 66) according to claim 1 or 2, wherein each critical computing device also comprises a module (G_P) for managing synchronization failure(s) that may be detected during the implementation of said method (24, 66), and in which the method comprises, during a current period, prior to the reception of at least one synchronization message and the estimate of the current time of the sending server (12):
- the transmission (32, 54, 72, 82), by the time management module (G_H) of the current critical computing device, to its own failure management module (G_P), of any information, associated with a module for managing failures (G_H) of at least one sending server (12) separate from the current critical computing device, and received during the preceding period,
- the performance (34, 56, 74, 84) of each action, not yet performed, received from its own failure management module.

4. The synchronization method (24) according to claim 1 or 2, the current critical computing device being a current server (12) from the plurality of servers (12), each server (12) being connected to each other server and each client by a virtual synchronization link (18),
wherein, during and initialization phase (26), the method comprises, prior to the reception (38, 46) of at least one synchronization message and the estimate (40, 48) of the current time of the sending server (12):
- the determination (34) of a time reference of the current server (12) by applying a predetermined affine function to the value of the internal clock of the current server (12) at the current moment, the affine function being associated with a factor and a shift, the values of which are initiated beforehand at predetermined initial values,
- the sending (36) of a synchronization message comprising an identification field representative of the initialization phase of the time management module (G_H) of the current server (12) and comprising the time reference of the current server (12).

5. The synchronization method (24) according to claim 4, wherein successively to the estimate (40) of the current time of the sending server carried out, for each received synchronization message comprising an identification field representative of the initialization phase (INIT) of a separate sending server, and implemented once a first predetermined number of synchronization messages is received, is achieved, the method comprises:
- determining (42) a new time reference corresponding to the current maximum time obtained from current times associated with each message,
- updating (44) the factor and the shift of the affine function as a function of said new time reference,
- starting (44) an operational phase (28) of the time management module of the current server.

6. The synchronization method (24) according to claim 4, wherein successively to the estimate (48) of the current time of the sending server (12) carried out, for each received synchronization message comprising an identification field representative of the operational phase (28) of a separate sending server (12), and implemented once a second predetermined number of synchronization messages is received, is achieved, the method comprises:
- determining (50) a new time reference corresponding to the current average time obtained from current times associated with each message,
- updating (52) the factor and the shift of the affine function as a function of said new time reference,
- starting (52) the operational phase (28) of the time management module of the current server.

7. The synchronization method (24) according to claims 3 and 5, the current critical computing device being a current server (12) from the plurality of servers, each server (12) being connected to each other server and each client by a virtual synchronization link (18),
wherein, during the operational phase (28), the method comprises:
- for each received synchronization message comprising an identification field representative of the operational phase (28) of a separate sending server (12):
- if the reception instant of the message is more than two periods earlier than the current instant, sending a piece of information representative of an anomaly to the failure management module (G_P) of the current client and stopping of the processing of the message,
- otherwise, said estimate (58) of the current time associated with said message,
- determining (60) a new time reference corresponding to the current average time obtained from the current time of the current server and current times associated with each message,
- updating (62) the factor and the shift of the affine function as a function of said new time reference, and
- sending (64) a synchronization message comprising an identification field representative of the operational phase of the current server and containing said time reference of the current server.

8. The synchronization method (66) according to any one of claims 1 to 3, the current critical computing device being a current client (14) from the plurality of clients (14), each client (14) being connected to each server (12) from the plurality of servers (12) by a virtual synchronization link (18),
wherein, during an initialization phase (68), successively to the estimate (78) of the current time of the sending server carried out from the first received synchronization message comprising an identification field representative of the operational phase (28) of a separate sending server (12), the method comprises:
- updating the time reference of the current client equal to the current time associated with said message,
- initializing (80) initial factor and shift values of an affine function applicable to the value of the internal clock of the current client,
- starting (80) the operational phase of the time management module of the current client.

9. The synchronization method (66) according to claim 3, the current critical computing device being a current client (14) from the plurality of clients (14), each client (14) being connected to each server (12) from the plurality of servers (12) by a virtual synchronization link (18),
wherein, during an operational phase (70), the method comprises:
- for each received synchronization message comprising an identification field representative of the operational phase (68) of a separate sending server (12):
- if the reception instant of the message is more than two periods earlier than the current instant, sending a piece of information representative of an anomaly to the failure management module (G_P) of the current client (14) and stopping of the processing of the message,
- otherwise, said estimate (90) of the current time associated with said message,
- if the absolute value of the difference between, on the one hand, a time reference of the current client (14) obtained by applying an affine function to the value of the internal clock of the current client at the current moment t_{c}, and on the other hand the average current time obtained (92) from current times associated with each message is above a predetermined precision threshold, the sending (94) of information representative of an anomaly to the failure management module (G_P) of the current client,
- determining a new time reference corresponding to the current average time obtained from current times associated with each message, and
- updating the factor and the shift of the affine function of the current client (14) as a function of said new time reference.

10. A system (10) for synchronizing a set of interconnected critical computing devices, in particular avionics devices, with a communication network (16) of a vehicle, and each comprising a time management module (G_H), the set of critical computing devices comprising at least one plurality of time reference servers (12), and a plurality of clients (14), each critical computing device being connected to at least one other critical computing device by a virtual link (18, 20), each termination point of a virtual link being associated with a minimum value BCTT and a maximum value WCTT of transmission time for a data packet over said virtual link (18, 20),
the time management module (G_H) of each current critical computing device being able to carry out and periodically reiterate at least:
- receiving (38, 46, 76, 86) at least one synchronization message transmitted by a sending server separate from said current critical computing device, each message being associated with a reception instant and comprising at least one time reference Hrefᵢ determined by said sending server,
- for each received synchronization message, estimating (40, 48, 58, 78, 90) the current time of the sending server from a quintuplet of parameters comprising:
▪ said time reference Hrefᵢ,
▪ a value h_{int_tc_di} of the internal clock of the current critical computing device at the current instant,
▪ a value h_{int_ti_di} of the internal clock of the current critical computing device at the reception instant,
▪ the minimum value BCTT(Sᵢ, dᵢ) and the maximum value WCTT(Sᵢ, dᵢ) of transmission time associated with the virtual link between the sending server (Sᵢ) and the current critical computing device (dᵢ).
